# EUROPEAN PATENT SPECIFICATION

(11) **EP 3 043 600 B1**
(45) Date of publication and mention of the grant of the patent: **04.07.2018**
(21) Application number: 13894824.5
(22) Date of filing: 30.09.2013
(51) Int. Cl.: H04W 48/06, H04W 28/08

(54) **METHOD AND APPARATUS FOR ADJUSTING CELL NETWORK CAMPING POLICY**
VERFAHREN UND VORRICHTUNG ZUR ANPASSUNG DER RICHTLINIEN FÜR ZELLENNETZWERK-CAMPING
PROCÉDÉ ET APPAREIL PERMETTANT D'AJUSTER UNE POLITIQUE D'ATTENTE D'UN RÉSEAU CELLULAIRE

(43) Date of publication of application: 13.07.2016
(73) Proprietor: Huawei Technologies Co., Ltd., Longgang District Shenzhen, Guangdong 518129 (CN)
(72) Inventor: WANG, Xueliang, Shenzhen Guangdong 518129 (CN)
(74) Representative: Maiwald Patent- und Rechtsanwaltsgesellschaft mbH
(86) International application number: PCT/CN2013/084735
(87) International publication number: WO 2015/042963

(56) References cited:
- WO-A1-2009/064930
- CN-A- 101 626 589
- CN-A- 101 742 598
- CN-A- 102 421 153
- CN-A- 102 457 943
- GB-A- 2 397 469
- US-A1- 2003 133 407
- US-A1- 2006 128 392
- US-A1- 2006 128 394
- US-A1- 2012 236 717
- US-A1- 2013 040 644
- US-B1- 7 319 675

## Description

### TECHNICAL FIELD

The present invention relates to the field of mobile communications technologies, and in particular, to a method for adjusting a network camping policy of a cell and an apparatus.

### BACKGROUND

Urban areas are densely populated and prosperous, and thereby are always a prime target for mobile communications service development; all operators invest huge efforts in network construction in urban areas. However, a complex radio propagation environment in urban areas is considerably unfavorable to station establishment and networking in mobile communications, and in particular, to a communication issue in high-rise buildings, which remains a challenge to mobile communications development. In traditional networking, a height of a base station antenna in an urban area is approximately 30 m in general; however, a high-rise building usually has a height of more than 60 m, and therefore may receive signals of multiple cells in surrounding or even relatively distant areas. This brings very strong frequency interference, and may cause a ping-pong effect or even a communication failure, and meanwhile a problem of no coverage may occur in some areas in which skyscrapers are located.

Currently, a method mainly used to address a communication issue in high-rise buildings is to build an indoor distributed system. However, intensive use of the distributed system is impossible, due to heavy investment and necessity of constructing an interior of high-rise buildings. In this case, hierarchical networking may be considered as an alternative solution to address coverage issues in high-rise buildings. The philosophy behind the hierarchical networking is to further build one layer of macro cell (a high-rise cell) at a physical upper layer of a common macro cell, and set a corresponding parameter to ensure a sound communication effect in high-rise buildings. In the hierarchical networking, the one layer of macro cell may use a separate frequency range, or may share a frequency range with the common macro cell.

To reduce impact of a high-speed downlink packet access (Speed Downlink Packet Access, HSDPA) data burst on an adaptive multirate (Adaptive MultiRate, AMR) voice service, in a service layering scenario, a separate carrier is used to carry the AMR voice service, so that AMR voice experience can be effectively assured.

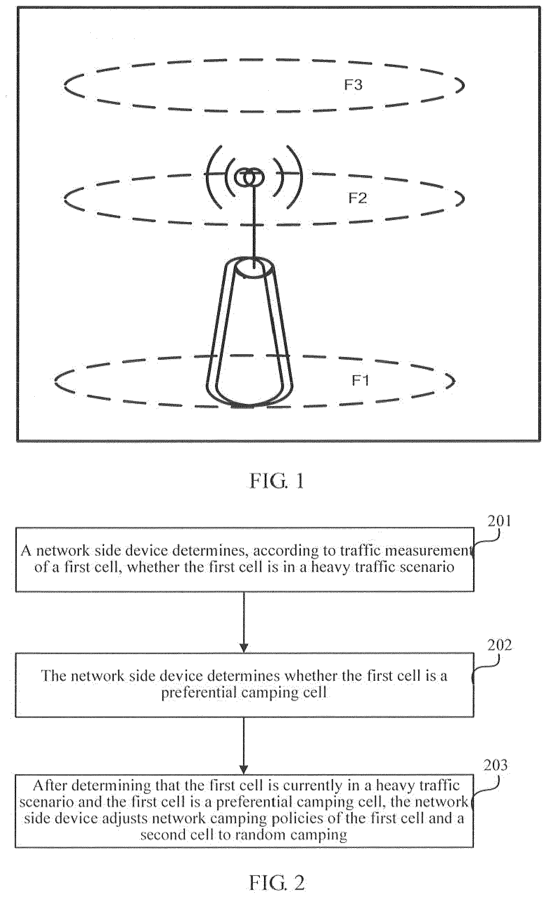

As shown in FIG. 1, in the service layering scenario, if the service layer consists of three carriers, namely, an F1 carrier, an F2 carrier, and an F3 carrier, and idle and CELL_PCH (PCH: Paging Channel, a CELL_PCH subscriber is a subscriber in a cell paging channel state) subscribers all camp on the F1 carrier, all services are initiated on the F1 carrier. If a burst of services occurs, the F1 carrier is prone to congestion, thereby degrading signal quality and making it more difficult to access. Flow control at the F1 carrier can reduce impact on sector capacity to an extent. However, if signal quality on the F1 carrier deteriorates and coverage shrinks, both a direct retry decision (direct retry decision, DRD) and a redirection process of the service layer are affected, and power efficiency cannot be ensured. For this reason, there is a need for a new solution. In the prior art, most commonly used solutions are as follows:

Solution one in the prior art: The service layering is implemented by means of a radio resource control (Radio Resource Control, RRC) redirection or a direct retry from an FACH state to a DCH state (CELL_FACH to CELL_DCH direct retry decision, F2H DRD). The RRC redirection means: After receiving an RRC connection request (RRC CONNECTION REQUEST) message of a user equipment (User Equipment, UE), a radio network controller (Radio Network Controller, RNC) returns an RRC connection reject (RRC CONNECTION REJECT) message to the UE, where the RRC connection reject message (the REJ message for short) carries a target frequency channel number. After receiving the REJ message, the UE searches, on the target frequency carried by the REJ message, for a cell to access. The F2H DRD means: An F2H DRD subscriber is migrated from a forward access channel (Forward Access Channel, CELL_FACH) state to a dedicated channel (Dedicated Channel, CELL_DCH) state and when HSDPA is used for bearing services, the RNC directly requests resources of a cell on another frequency, and a frequency channel number and scrambling code information of the target cell are carried in a radio bearer (Radio Bearer, RB) reconfiguration message (RADIO BEARER RECONFIGURATION). After receiving the RB reconfiguration message, the UE gains access to the target cell. However, a technical problem in implementing the service layering by means of the RRC redirection or the F2H DRD is: When the F1 coverage shrinks, the F2H·DRD message may not reach the UE, thereby affecting subscriber experience.

Solution two in the prior art: Control a potential subscriber. A specific method is: Step 1: Periodically monitor load of a current cell and a neighboring cell thereof. Step 2: Adjust parameters of the current cell and its neighboring cell according to a load condition (the parameters may be adjusted according to a manner shown in Table 1, where → indicates remaining unchanged, ↘ indicates adjusting downwards, and ↗ indicates adjusting upwards). Step 3: Detect whether the parameters of the current cell and its neighboring cell change. If the parameters change, update and broadcast system messages of the current cell and the neighboring cell thereof, and then go to step 3; if the parameters do not change, directly go to step 1.

**Table 1**

| **Load of a Neighboring Cell** | **Load of a Current Cell** | **Change of a Q'offset1 Value** | **Change of a Q'offset2 Value** |
|---|---|---|---|
| Light | Light | → | → |
| Light | Normal | → | → |
| Light | Heavy | ↘ | ↘ |
| Normal | Light | → | → |
| Normal | Normal | → | → |
| Nonnal | Heavy | ↘ | ↘ |
| Heavy | Light | → | → |
| Heavy | Normal | ↗ | ↗ |
| Heavy | Heavy | → | → |

However, in the solution two in the prior art, a cell selection and reselection parameter is adjusted at a low speed for purposes of service balancing. In a service layering scenario, all subscribers camp on one frequency; therefore, this solution is not applicable to the service layering scenario. In addition, in a heavy traffic scenario, there is a large quantity of connected subscribers, and therefore an algorithm needs to respond quickly. However, in the foregoing solution, only a low-speed adjustment is achieved; therefore, the foregoing solution cannot be applied to the heavy traffic scenario.

US 2006/0128394 A1 describes load redistribution and other benefits may be achieved by dynamically distributing or steering idle mobile stations to a particular cell or area.

US 2006/0128392 A1 describes that idle mobile stations are steered to a particular cell or service area to accommodate subscriber preferences or restrictions, subscription services, or network operator preferences or restrictions and/or to accomplish load redistribution or other network management functions. Multiple idle mobile station steering factors are considered. Steering may be accomplished using a variety of techniques such as rejecting registration attempts in certain cells and accepting those attempts in others and adjusting cell broadcast parameters.

US 2012/236717 A1 described providing for dynamic cell resource management in wireless networking. As therein described, user terminal access parameters can be dynamically modified based on changing load conditions at one or more cells of a wireless network.

GB 2 397 469 A describes a system for cell biasing for idle mode subscriber units in a cellular communication system. A base station comprises a load processor for locally determining load information for a cell in response to load related operating conditions of the cell. The load information may be a congestion level of the cell.

WO 2009/064930 A1 describes systems and methodologies that facilitate utilizing restriction codes in rejecting connection requests with restricted association access points to indicate a reason for the rejection. Mobile devices can maintain a list of accessible access points and/or groups of access points, which can be consulted during cell reselection to ensure unsuitable restricted association access points are not utilized in cell reselection. Based on receiving a rejection code from a restricted association access point, a mobile device can remove the access point, or a related group, from its maintained list so that subsequent reselection attempts avoid the access point and/or access points in the related group.

US 7 319 675 B1 describes systems and methods wherein call-blocking probability of a telecommunications system is calculated based on consideration of over flow paths and alternate routes. Once the routes and overflow pathways are identified, the total number of call attempts and calls failed, due to congestion, is determined from statistical route data. Dividing the number of failed calls due to congestion by the number of attempted calls results in the blocking proportion for each route that is used by the methods disclosed therein to calculate the probability of blocking for that route.

US 2003/133407 A1 describes supporting a changing volume of a voice-grade traffic in an access network having a local exchange with a limited capacity.

### SUMMARY

Embodiments of the present invention provide a method for adjusting a network camping policy of a cell and an apparatus as defined by the independent claims, so as to resolve a problem in the prior art that, in a networking scenario of service layering, Idle and CELL_PCH subscribers all camp on a carrier, and if a burst of services occurs, the carrier is prone to congestion, thereby degrading signal quality and making it more difficult to access. Further embodiments are provided by the dependent claims.

According to a first aspect, a cell camping policy adjustment method is provided, where the method includes:
determining, by a network side device according to traffic measurement of a first cell, whether the first cell is in a heavy traffic scenario;
determining, by the network side device, according to a selection and reselection parameter of the first cell whether the first cell is a preferential
camping cell; and
adjusting, by the network side device after determining that the first cell is in the heavy traffic scenario and the first cell is the preferential camping cell, network camping policies of the first cell and a second cell to random camping, where the first cell and the second cell are inter-frequency co-coverage neighboring cells wherein load of the second cell is less than a second threshold;
after adjusting the network camping policy of the first cell to random camping, skipping performing, by the network side device for a subscriber who accesses the first cell, a direct retry or a redirection due to service layering.

With reference to the first aspect, in a first possible implementation, the determining, by a network side device according to traffic measurement of a first cell, whether the first cell is in a heavy traffic scenario includes:
determining, by the network side device when the number of radio resource control RRC connection requests received by the first cell in a first duration is greater than or equal to a threshold on the number of RRC accesses, and a proportion of RRC connection requests rejected by the first cell in the first duration due to insufficient air interface resources to received RRC connection requests is greater than or equal to a first preset threshold, that the first cell is in a heavy traffic scenario; or
determining, by the network side device when the number of cell update requests received by the first cell in a second duration is greater than or equal to a threshold on the number of update requests, that the first cell is in a heavy traffic scenario; or
determining, by the network side device when the number of connected subscribers in the first cell is greater than or equal to a threshold on the number of subscribers, that the first cell is in a heavy traffic scenario.

With reference to the first aspect or the first possible implementation of the first aspect, in a second possible implementation, the determining, by the network side device, whether the first cell is a preferential camping cell includes:
determining, by the network side device according to a selection and reselection parameter of the first cell or a selection and reselection parameter of the second cell, or a Bar attribute of the second cell, whether the first cell is a preferential camping cell, where load of the second cell is less than a second threshold.

With reference to the second possible implementation, in a third possible implementation, the determining, by the network side device according to a selection and reselection parameter of the first cell or a selection and reselection parameter of the second cell, whether the first cell is a preferential camping cell includes:
determining, by the network side device when a pilot measurement type of the first cell is measurement based on received signal code power RSCP and an idle signal quality offset 1 IdleQoffset1sn, configured on the first cell, of the second cell is greater than or equal to a first preferential camping threshold, that the first cell is a preferential camping cell; or
determining, by the network side device when a pilot measurement type of the first cell is measurement based on received signal code power RSCP and an IdleQoffset1sn, configured on the second cell, of the first cell is less than or equal to a second preferential camping threshold, that the first cell is a preferential camping cell; or
determining, by the network side device when a pilot measurement type of the first cell is measurement based on ECN0 and an idle signal quality offset 2 IdleQoffset2sn, configured on the first cell, of the second cell is greater than or equal to a third preferential camping threshold, that the first cell is a preferential camping cell; or
determining, by the network side device when a pilot measurement type of the first cell is measurement based on ECNO and an idle signal quality offset 2 IdleQoffset2sn, configured on the second cell, of the first cell is less than or equal to a fourth preferential camping threshold, that the first cell is a preferential camping cell.

With reference to the second possible implementation, in a fourth possible implementation, the determining, by the network side device according to a Bar attribute of the second cell, whether the first cell is a preferential camping cell includes:
determining, by the network side device when determining, according to the Bar attribute of the second cell, that the second cell is a cell on which no subscriber is allowed to camp, that the network camping policy of the first cell is preferential camping.

With reference to the second possible implementation of the first aspect to the fourth possible implementation of the first aspect, in a fifth possible implementation, the adjusting, by the network side device, network camping policies of the first cell and a second cell to random camping includes:
adjusting, by the network side device, a reselection-starting measurement threshold IdleSintersearch of the first cell and the second cell to a first optimized value, where the first optimized value is greater than a reselection-starting measurement threshold that is set when the first cell is preferential camping.

With reference to the first aspect to the fifth possible implementation of the first aspect, in a sixth possible implementation, after the adjusting network camping policies of the first cell and a second cell to random camping, the method further includes:
if the second cell is a cell on which no subscriber is allowed to camp, adjusting, by the network side device, the bar attribute of the second cell, so that a subscriber is allowed to camp on the second cell.

With reference to the fifth possible implementation of the first aspect or the sixth possible implementation of the first aspect, in a seventh possible implementation, the adjusting, by the network side device, a network camping policy of the first cell to random camping further includes:
if a system message 5 delivered by the first cell or the second cell includes an SsearchHCS parameter for starting inter-frequency reselection in a hierarchical cell structure scenario, adjusting, by the network side device, a value of the SsearchHCS parameter to a second optimized value.

With reference to the first aspect to the seventh possible implementation of the first aspect, in an eighth possible implementation, the method further includes:
after adjusting the network camping policy of the first cell to random camping, skipping performing, by the network side device for a subscriber who accesses the first cell, a direct retry or a redirection due to service layering.

According to a second aspect, a network side device is provided, where the network side device includes:
a determining module, configured to determine, according to traffic measurement of a first cell, whether the first cell is in a heavy traffic scenario, and determine whether the first cell is a preferential camping cell; and
a camping policy adjusting module, configured to adjust, after it is determined that the first cell is in a heavy traffic scenario and the first cell is a preferential camping cell, network camping policies of the first cell and a second cell to random camping, where the first cell and the second cell are inter-frequency co-coverage neighboring cells.

With reference to the second aspect, in a first possible implementation of the second aspect, the determining module includes:
a first determining unit, configured to determine, according to traffic measurement of the first cell, whether the first cell is in a heavy traffic scenario; and
a second determining unit, configured to determine, by the network side device according to a selection and reselection parameter of the first cell or a selection and reselection parameter of the second cell, or a Bar attribute of the second cell, whether the first cell is a preferential camping cell, where load of the second cell is less than a second threshold.

With reference to the first possible implementation of the second aspect, in a second possible implementation of the second aspect, the first determining unit includes:
an RRC connection request quantity determining subunit, configured to determine, when the number of radio resource control RRC connection requests received by the first cell in a first duration is greater than or equal to a threshold on the number of RRC accesses, and a proportion of RRC connection requests rejected by the first cell in the first duration due to insufficient air interface resources to received RRC connection requests is greater than or equal to a first preset threshold, that the first cell is in a heavy traffic scenario;
an update request quantity determining subunit, configured to determine, when the number of cell update requests received by the first cell in a second duration is greater than or equal to a threshold on the number of update requests, that the first cell is in a heavy traffic scenario; and
a subscriber quantity determining subunit, configured to determine, when the number of connected subscribers in the first cell is greater than or equal to a threshold on the number of subscribers, that the first cell is in a heavy traffic scenario.

With reference to the first possible implementation of the second aspect, in a third possible implementation of the second aspect, the second determining unit includes:
a first selection and reselection parameter determining subunit, configured to, if a pilot measurement type of the first cell is measurement based on received signal code power RSCP, determine that the first cell is a preferential camping cell, if an idle signal quality offset 1 IdleQoffset1sn, configured on the first cell, of the second cell is greater than or equal to a first preferential camping threshold; or determine that the first cell is a preferential camping cell, if an IdleQoffset1sn, configured on the second cell, of the first cell is less than or equal to a second preferential camping threshold;
a second selection and reselection parameter determining subunit, configured to, if the pilot measurement type of the first cell is measurement based on ECNO, determine that the first cell is a preferential camping cell, if an idle signal quality offset 2 IdleQoffset2sn, configured on the first cell, of the second cell is greater than or equal to a third preferential camping threshold; or determine that the first cell is a preferential camping cell, if an idle signal quality offset 2 IdleQoffset2sn, configured on the second cell, of the first cell is less than or equal to a fourth preferential camping threshold; and
a Bar attribute determining subunit, configured to determine, when it is determined, according to the Bar attribute of the second cell, that the second cell is a cell on which no subscriber is allowed to camp, that a network camping policy of the first cell is preferential camping.

With reference to the second possible implementation of the second aspect or the third possible implementation of the second aspect, in a fourth possible implementation of the second aspect, the camping policy adjusting module includes:
a first adjusting subunit, configured to adjust a reselection-starting measurement threshold IdleSintersearch of the first cell and the second cell to a first optimized value, where the first optimized value is greater than a reselection-starting measurement threshold that is set when the first cell is preferential camping;
a second adjusting subunit, configured to adjust, if a system message 5 delivered by the first cell or the second cell includes an SsearchHCS parameter for starting inter-frequency reselection enabling in a hierarchical cell structure scenario, a value of the SsearchHCS parameter to a second optimized value; and
a third adjusting subunit, configured to, if the second cell is a cell on which no subscriber is allowed to camp, adjust the bar attribute of the second cell, so that a subscriber is allowed to camp on the second cell.

With reference to the fourth possible implementation of the second aspect, in a fifth possible implementation of the second aspect, the camping policy adjusting module includes:
a fourth adjusting subunit, configured to, after adjusting the network camping policy of the first cell to random camping, skip performing, for a subscriber who accesses the first cell, a direct retry or a redirection due to service layering.

In the method and the apparatus provided in the present invention, it is first identified whether a target cell is in a heavy traffic scenario. In the heavy traffic scenario, if it is determined that a network camping policy of the target cell is preferential camping, preferential camping is adjusted to random camping. In the heavy traffic scenario, a burst of services may occur; therefore, if the network camping policy of the target cell is preferential camping, a carrier is prone to congestion, thereby degrading signal quality and making it more difficult to access. If preferential camping is adjusted to random camping, when a burst of services occurs, the bursty services may be randomly sent to available carrier, thereby relieving system congestion, improving customer experience, and ensuring system capacity of a system when services received by the system are several times more than services that can be handled by the system.

### BRIEF DESCRIPTION OF DRAWINGS

FIG. 1 is a schematic networking diagram of service layering in the prior art;
FIG. 2 is a schematic flowchart of a method for adjusting a network camping policy of a cell according to an embodiment of the present invention;
FIG. 3 is a schematic structural diagram of a network side device according to an embodiment of the present invention;
FIG. 4 is a schematic structural diagram of a determining module in a network side device according to an embodiment of the present invention;
FIG. 5 is a schematic structural diagram of a first determining unit in a network side device according to an embodiment of the present invention;
FIG. 6 is a schematic structural diagram of a second determining unit in a network side device according to an embodiment of the present invention;
FIG. 7 is a schematic structural diagram of a camping policy adjusting module in a network side device according to an embodiment of the present invention; and
FIG. 8 is a schematic structural diagram of a radio network controller RNC according to an embodiment of the present invention.

### DESCRIPTION OF EMBODIMENTS

In a networking scenario of service layering, if Idle subscribers and PCH subscribers all camp on a carrier, all services are initiated on the carrier. If a burst of services occurs, the carrier is prone to congestion, thereby degrading signal quality and making it more difficult to access. To resolve the foregoing problems, the present invention provides a solution for adjusting a network camping policy in a heavy traffic scenario. When it is identified that a target cell is in a heavy traffic scenario, and it is identified that a network camping policy of the target cell is preferential camping, the network camping policy is changed. A specific method includes the following:

A network side device determines, according to traffic measurement of a first cell, whether the first cell is in a heavy traffic scenario; the network side device determines whether the first cell is a preferential camping cell; and
after determining that the first cell is in the heavy traffic scenario and the first cell is the preferential camping cell, the network side device adjusts network camping policies of the first cell and a second cell to random camping, where the first cell and the second cell are inter-frequency co-coverage neighboring cells.

In the method provided in the present invention, it is first identified whether a first cell (that is, a target cell to which a UE accesses) is in a heavy traffic scenario. In the heavy traffic scenario, if it is determined that a network camping policy of the target cell is preferential camping, preferential camping is adjusted to random camping. In the heavy traffic scenario, a burst of services may occur; therefore, if the network camping policy of the target cell is preferential camping, a carrier is prone to congestion, thereby degrading signal quality and making it more difficult to access. If preferential camping is adjusted to random camping, when a burst of services occurs, the bursty services may be randomly sent to available carrier, thereby relieving system congestion, improving customer experience, and ensuring system capacity when services received by the system are several times more than services that can be handled by the system.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

As shown in FIG. 2, the present invention provides a method for adjusting a network camping policy of a cell, where the method specifically includes the following steps:
Step 201: A network side device determines, according to traffic measurement of a first cell, whether the first cell is currently in a heavy traffic scenario.

The heavy traffic scenario means: The number of subscribers who attempt to access a cell exceeds capacity of the cell.

Step 202: The network side device determines whether the first cell is a preferential camping cell.

In this embodiment of the present invention, when a cell has at least one inter-frequency co-coverage neighboring cell, to enable Idle subscribers and PCH subscribers in an area in which the cell is located to camp on a specific cell, the network side device may adjust a network camping policy to preferential camping, so that the Idle subscribers and the PCH subscribers camp on the specific cell. In this case, the specific cell is referred to as a preferential camping cell.

Step 203: After determining that the first cell is in the heavy traffic scenario and the first cell is the preferential camping cell, the network side device adjusts network camping policies of the first cell and a second cell to random camping, where the first cell and the second cell are inter-frequency co-coverage neighboring cells.

A network camping policy opposite to preferential camping is random camping. When a cell has at least one inter-frequency co-coverage neighboring cell, to enable a connected subscriber in an area in which the cell is located to randomly camp on the cell or the inter-frequency co-coverage neighboring cell, the network camping policy may be adjusted to random camping.

For example, a carrier frequency of the first cell is F1, and the second cell with a carrier frequency F2 is also located in an area in which the first cell is located. In case of preferential camping, Idle subscribers and PCH subscribers in the area in which the first cell is located only camp on the first cell, and the first cell is referred to as a preferential camping cell; in case of random camping, the Idle subscribers and PCH subscribers in the area in which the first cell is located randomly camp on the first cell and/or the second cell.

It should be noted that the second cell herein does not refer to a specified cell. In a practical application, the first cell may have multiple inter-frequency co-coverage neighboring cells; therefore, the second cell may refer to multiple cells.

If the first cell is a preferential camping cell and is in the heavy traffic scenario, the first cell is overloaded, and the second cell is not fully utilized, thereby causing a load imbalance between cells, and also causing an inappropriate use of system resources. In this embodiment of the present invention, in this heavy traffic scenario, if it is detected that the first cell is a preferential camping cell, the network side device accordingly adjusts the network camping policies of the first cell and the second cell to random camping (the first cell and the second cell are inter-frequency co-coverage neighboring cells). After the network camping policies of the first cell and the second cell are adjusted to random camping, a subscriber may randomly camp on the first cell and/or the second cell, thereby achieving effects of relieving system congestion, improving customer experience, and ensuring system capacity when services received by the system are several times more than services that can be handled by the system.

In addition, the preferential camping policy is generally used with service layering. Therefore, after the network camping policy is changed to random camping, service layering is no longer required. Therefore, in this embodiment of the present invention, after the network side device adjusts the network camping policy of the first cell to random camping, the method further includes the following:
After adjusting the network camping policy of the first cell to random camping, the network side device does not perform, for a subscriber who has accessed the first cell, a direct retry or a redirection due to service layering.

The direct retry (direct retry decision, DRD) means: An RNC requests a CELL_DCH subscriber in the first cell to access another cell with a different frequency. The redirection means: An RNC requests an Idle subscriber or a PCH subscriber in the first cell to access another cell with a different frequency.

In this embodiment of the present invention, there are multiple methods for determining, by the network side device, whether the first cell is currently in a heavy traffic scenario. The following provides several most optimized implementation manners, and each manner may be separately used, and may also be used together. The method specifically includes:
A1. Determine, based on the number of RRC connection requests, whether the first cell is in a heavy traffic scenario.

When the number of radio resource control (RRC) connection requests received by the first cell in a first duration is greater than or equal to a threshold on the number of RRC connections, and a proportion of RRC connection requests rejected by the first cell in the first duration due to insufficient air interface resources to received RRC connection requests is greater than or equal to a first threshold, the network side device determines that the first cell is in a heavy traffic scenario.

During a process of an RRC connection, the network side device (an RNC, for example) allocates a resource to a UE, which is a process known as admission process; if no power or code resource is allocated, the RRC connection request is rejected due to insufficient air interface resources.

A2. Determine, based on the number of cell update requests, whether the first cell is in a heavy traffic scenario.

When the number of cell update requests received by the first cell in a second duration is greater than or equal to a threshold on the number of update requests, the network side device determines that the first cell is in a heavy traffic scenario.

A3. Determine, based on the current number of subscribers in a cell, whether the first cell is currently in a heavy traffic scenario.

When the total number of connected subscribers in the first cell is greater than or equal to a threshold on the number of subscribers, the network side device determines that the first cell is in a heavy traffic scenario.

The connected subscribers include DCH subscribers and DCH+FACH subscribers. In addition, the total number of connected subscribers in the first cell may be the average number of subscribers within a period of time, and may also be the number of subscribers detected in the first cell at a given point of time.

In this embodiment of the present invention, after it is determined that the first cell is in a heavy traffic scenario, the network side device further determines whether the first cell is a preferential camping cell. Whether the first cell is a preferential camping cell may be determined by performing the following steps:
The network side device determines, according to a selection and reselection parameter of the first cell or a selection and reselection parameter of the second cell, or a Bar attribute of the second cell, whether the first cell is a preferential camping cell, where load of the second cell is less than a second threshold.

The second cell refers to a cell which operates on a different frequency but is located in a same coverage area as the first cell. The network side device (RNC) may add a frequency channel number of the inter-frequency cell to a radio bearer reconfiguration (Radio Bearer Reconfiguration, RB reconfiguration) message as a target frequency channel number, and instruct a subscriber to establish a service in the cell which operates on the target frequency. Load of a cell may be uplink or downlink power load of the cell. When both uplink power load and downlink power load of a inter-frequency co-coverage neighboring cell are low, it indicates that capacity of the inter-frequency co-coverage neighboring cell is not fully used, and more subscribers may access the inter-frequency co-coverage neighboring cell. In this case, adjusting preferential camping to random camping may achieve an effect of efficient resource utilization.

In this embodiment, there are multiple implementation manners of determining the network camping policy of the first cell according to a cell selection or reselection parameter of the second cell or the Bar attribute of the second cell. For example:

B1. When a pilot measurement type of the first cell is measurement based on received signal code power (Received Signal Code Power, RSCP), and an idle signal quality offset 1 IdleQoffset1sn, configured on the first cell, of the second cell is greater than or equal to a first preferential camping threshold, the network side device determines that the first cell is a preferential camping cell.

In addition, the first cell and the second cell are neighboring cells. The practice of allowing a subscriber to preferentially camp on the first cell may be further implemented by configuring, on the second cell, an IdleQoffset1sn of the first cell (that is, it is determined, according to an IdleQoffset1sn in case of reverse neighbor relationship, that the network camping policy of the first cell is preferential camping). A specific implementation includes the following:
When the pilot measurement type of the first cell is measurement based on received signal code power RSCP, and the IdleQoffset1sn, configured on the second cell, of the first cell is less than or equal to a second preferential camping threshold, the network side device determines that the first cell is a preferential camping cell; in the most optimized implementation, the second preferential camping threshold may be an opposite number of the first preferential camping threshold (that is, first preferential camping threshold = (-1) x second preferential camping threshold).

The IdleQoffset1sn is used in the R criteria. Candidate cells available for cell selection and reselection are sorted by signal quality of a neighboring cell minus IdleQoffset1sn, and according to a sorting result, a cell with the best signal quality is selected for access.

In this embodiment, if the first preferential camping threshold is a positive value (for example, 10), the second preferential camping threshold may be an opposite number (-10) of the first preferential camping threshold; the IdleQoffset1sn, configured on the first cell, of the second cell and the IdleQoffset1sn, configured on the second cell, of the first cell arc two different configurations. For case of comparison, an opposite number relationship may also be established between the two parameters, that is, the IdleQoffset1sn, configured on the first cell, of the second cell is an opposite number of the IdleQoffset1sn, configured on the second cell, of the first cell.

B2. When the pilot measurement type of the first cell is measurement based on ECN0, and an idle signal quality offset 2 IdleQoffset2sn, configured on the first cell, of the second cell is greater than or equal to a third preferential camping threshold, the network side device determines that the first cell is a preferential camping cell.

In addition, the first cell and the second cell are neighboring cells. The practice of allowing a subscriber to preferentially camp on the first cell may be further implemented by configuring, on the second cell, an IdleQoffset2sn of the first cell (that is, it may be further determined, according to an IdleQoffset1sn in case of reverse neighbor relationship, that the network camping policy of the first cell is preferential camping). A specific implementation includes the following:
When the pilot measurement type of the first cell is measurement based on ECN0, and an idle signal quality offset 2 IdleQoffset2sn, configured on the second cell, of the first cell is less than or equal to a fourth preferential camping threshold, the network side device determines that the network camping policy of the first cell is preferential camping.

In this embodiment, the IdleQoffset2sn, configured on the first cell, of the second cell and the IdleQoffset2sn, configured on the second cell, of the first cell are two different configurations. For ease of comparison, an opposite number relationship may also be established between the two parameters, that is, the IdleQoffset2sn, configured on the first cell, of the second cell is an opposite number of the IdleQoffset2sn, configured on the second cell, of the first cell.

B3. When determining, according to the Bar attribute of the second cell, that the second cell is a cell on which no subscriber is allowed to camp, the network side device determines that the network camping policy of the first cell is preferential camping.

In the method provided in this embodiment of the present invention, after it is determined that the first cell is in a heavy traffic scenario and the network camping policy of the first cell is preferential camping, parameters of the first cell and the second cell need to be adjusted, so that after the adjustment, subscribers can be evenly distributed among the first cell and the second cell. For this reason, the network side device adjusts the network camping policy of the first cell to random camping, where specific adjusted parameters include a combination of one or multiple of the following parameters: measurement threshold (IdleSintersearch) for starting reselection, threshold (SsearchHCS) for starting inter-frequency reselection in a hierarchical cell structure scenario, IdleQoffset1sn, IdleQoffset2sn, and Bar attribute. For example:
(1) The network side device may adjust an IdleSintersearch of the first cell and IdleSintersearch of the second cell to a first optimized value, where the first optimized value is greater than a reselection-starting measurement threshold that is set when the first cell is preferential camping.

In this embodiment, the parameters of both the first cell (that is, the determined preferential camping cell) and the second cell are adjusted, so as to achieve an effect of evenly distributing subscribers among the first cell and the second cell. In this way, when a burst of services occurs, a carrier is not prone to congestion, and a resulting deterioration of signal quality and an increase in access difficulty can be avoided. A specific implementation includes:
C1. Processing for the first cell (that is, the preferential camping cell): The measurement threshold IdleSintersearch for starting reselection takes a preset first optimized value, and the preset first optimized value is greater than a reselection-starting measurement threshold that is set when the first cell is the preferential camping cell.

UE's behavior is to monitor a signal of the local cell, if signal quality is lower than the measurement threshold IdleSintersearch for starting reselection, inter-frequency measurement is started, "signal quality of the local cell + hysteresis" and "signal quality of a neighboring cell - IdleQoffset1sn" are compared, and if a value of the neighboring cell is greater than that of the local cell, cell reselection is initiated. In case of preferential camping, to avoid reselection initiated by a subscriber in a preferential camping cell, the measurement threshold IdleSintersearch for starting reselection is set to a relatively small value, and the inter-frequency reselection measurement is initiated only when signal quality is lower than the IdleSintersearch, thereby ensuring implementation of the preferential camping. In a random camping scenario, a subscriber is allowed to perform reselection among multiple carriers, so as to acquire relatively high signal quality; in this case, the measurement threshold IdleSintersearch for starting reselection is adjusted to a larger value.

For a neighboring cell pair relationship that meets a preferential camping condition, an IdleQoffset1sn and an IdleQoffset2sn that correspond to the neighboring cell pair relationship take a value of 0 or a relatively small absolute value. In addition, the IdleQoffset1sn is delivered in a system message 3 (SIB3) to the UE; and the IdleQoffset2sn is delivered in a system message 11 (SIB11) to the UE.

C2. Processing for the second cell (that is, a neighboring cell for blind handover): The measurement threshold IdleSintersearch for starting reselection takes the preset first optimized value. For a neighboring cell pair relationship that meets a preferential camping condition, an IdleQoffset1sn and an IdleQoffset2sn that correspond to the neighboring cell pair relationship take a value of 0 or a relatively small absolute value.

Further, if the second cell is a cell on which no subscriber is allowed to camp (that is, if the cell is Barred), the network side device adjusts the bar attribute of the second cell (performs unbarring processing), so that a subscriber is allowed to camp on the blind handover neighboring cell.

The unBarring processing is to set the barred status in a system message 4 (SIB4) to cell not barred, that is, to allow a connected UE to camp on a cell.

(2) If a system message 5 delivered by the first cell or the second cell includes a parameter (SsearchHCS) for starting inter-frequency reselection in a hierarchical cell structure scenario, the network side device adjusts a value of the SsearchHCS parameter to a preset second optimized value.

Assuming that it is determined, according to the number of RRC connections, whether a cell is in a heavy traffic scenario, a specific implementation of the method provided in this embodiment of the present invention may be as follows:

The network side device (may be an RNC) accumulates the number of RRC accesses of the first cell (for example, 15 RRC accesses, including RRC requests or cell update requests) within a certain period (for example, 5 minutes). If the accumulated number of accesses is greater than a threshold on the number of RRC accesses (for example, the threshold on the number of RRC accesses is 10 times/5 minutes), it is determined that the target cell is in a heavy traffic scenario. Further, to avoid a malicious attack (for example, pinging an IP address segment), the number of RRC accesses may be continuously detected for two periods of time. It is determined, only when the number of RRC accesses within each of the two periods of time is greater than the preset threshold, that the first cell is in a heavy traffic scenario.

After it is determined that the first cell is in a heavy traffic scenario, a network camping policy of cells (the first cell and a neighboring cell of the first cell) in a neighboring cell pair relationship that meets a preferential camping condition is adjusted from preferential camping to random camping, so as to increase sector capacity.

In the foregoing method provided in this embodiment of the present invention, it is first identified whether a first cell (that is, a target cell) is in a heavy traffic scenario. In the heavy traffic scenario, if it is determined that a network camping policy of the target cell is preferential camping, preferential camping is adjusted to random camping. In the heavy traffic scenario, a burst of services may occur; therefore, if the network camping policy of the target cell is preferential camping, a carrier is prone to congestion, thereby degrading signal quality and making it more difficult to access. If preferential camping is adjusted to random camping, when a burst of services occurs, the bursty services may be randomly sent to available carrier, thereby relieving system congestion, improving customer experience, and ensuring system capacity when services received by the system are several times more than services that can be handled by the system.

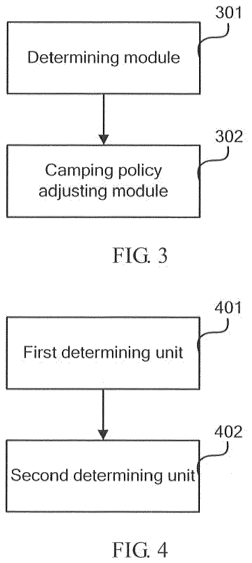

As shown in FIG. 3, according to the foregoing method, the present invention further provides a network side device, where the network side device includes:
a determining module 301, configured to determine, according to traffic measurement of a first cell, whether the first cell is in a heavy traffic scenario, and determine whether the first cell is a preferential camping cell; and
a camping policy adjusting module 302, configured to adjust, after it is determined that the first cell is in the heavy traffic scenario and the first cell is the preferential camping cell, network camping policies of the first cell and a second cell to random camping, where the first cell and the second cell are inter-frequency co-coverage neighboring cells.

The determining module 301 provided in this embodiment of the present invention is configured to determine whether a cell is in a heavy traffic scenario, and determine whether the first cell is a preferential camping cell, and the two determining conditions are independent of each other; therefore, two individual modules may be provided to separately perform the foregoing two determining steps, and the determining module includes the following two units (FIG. 4 is a schematic structural diagram of the determining module 301):
a first determining unit 401, configured to determine, according to traffic measurement of the first cell, whether the first cell is in a heavy traffic scenario; and
a second determining unit 402, configured to determine, by the network side device according to a selection and reselection parameter of the first cell or a selection and reselection parameter of the second cell, or a Bar attribute of the second cell, whether the first cell is a preferential camping cell, where load of the second cell is less than a second threshold.

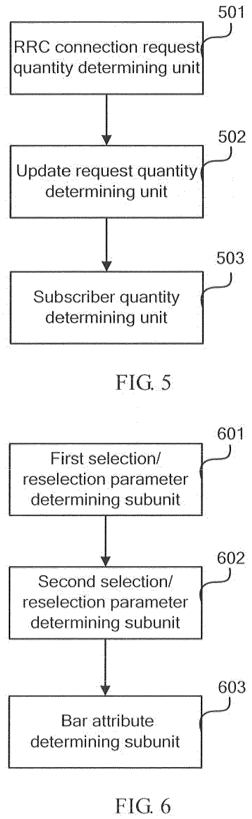

As shown in FIG. 5, in this embodiment of the present invention, there are multiple implementation manners of determining, by the network side device, whether the first cell is currently in a heavy traffic scenario. The following provides several most optimized implementation manners, and each manner may be separately used, and may also be used together. Therefore, the first detennining unit 401 further includes several subunits, and each subunit of the first determining unit 401 provided in this embodiment may be separately used, and may be used in a random combination. The first determining unit 401 specifically includes:
an RRC connection request quantity determining unit 501, configured to determine, when the number of radio resource control RRC connection requests received by the first cell in a first duration is greater than or equal to a threshold on the number of RRC accesses, and a proportion of RRC connection requests rejected by the first cell in the first duration due to insufficient air interface resources to received RRC connection requests is greater than or equal to a first preset threshold, that the first cell is in a heavy traffic scenario;
an update request quantity determining unit 502, configured to determine, when the number of cell update requests received by the first cell in a second duration is greater than or equal to a threshold on the number of update requests, that the first cell is in a heavy traffic scenario;
a subscriber quantity determining unit 503, configured to determine, when the number of connected subscribers in the first cell is greater than or equal to a threshold on the number of subscribers, that the first cell is in a heavy traffic scenario.

In this embodiment of the present invention, after it is determined that the first cell is in a heavy traffic scenario, the network side device determines a network camping policy of the first cell, and the second determining unit 402 includes (FIG. 6 is a schematic structural diagram of the second determining unit 402):
a first selection and reselection parameter determining subunit 601, configured to, if a pilot measurement type of the first cell is measurement based on received signal code power RSCP, determine that the first cell is a preferential camping cell, if an idle signal quality offset 1 IdleQoffset1sn, configured on the first cell, of the second cell is greater than or equal to a first preferential camping threshold; or determine that the first cell is a preferential camping cell, when an IdleQoffset1sn, configured on the second cell, of the first cell is less than or equal to a second preferential camping threshold;
a second selection and reselection parameter determining subunit 602, configured to, if the pilot measurement type of the first cell is measurement based on ECNO, determine that the first cell is a preferential camping cell, if an idle signal quality offset 2 IdleQoffset2sn, configured on the first cell, of the second cell is greater than or equal to a third preferential camping threshold; or determine that the first cell is a preferential camping cell, when an idle signal quality offset 2 IdleQoffset2sn, configured on the second cell, of the first cell is less than or equal to a fourth preferential camping threshold;
a Bar attribute determining subunit 603, configured to determine, when it is determined, according to the Bar attribute of the second cell, that the second cell is a cell on which no subscriber is allowed to camp, that a network camping policy of the first cell is preferential camping.

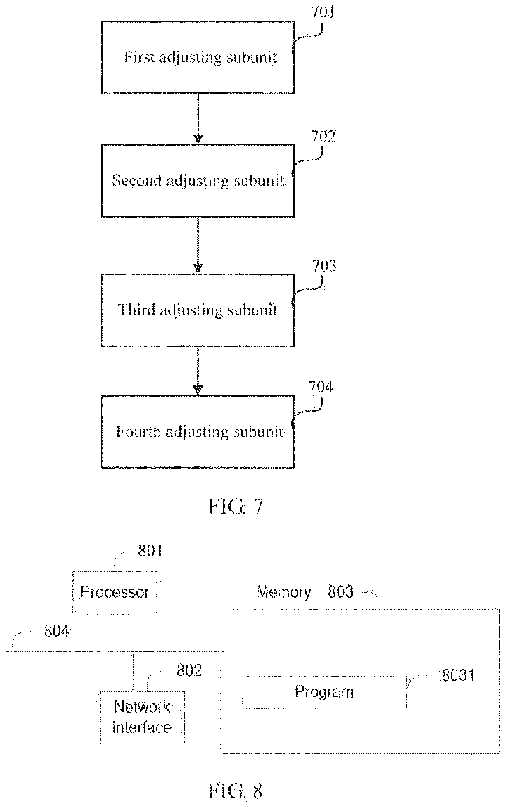

In the network side device provided in this embodiment of the present invention, after it is determined that the first cell is in a heavy traffic scenario and the network camping policy of the first cell is preferential camping, parameters of the first cell and a neighboring cell need to be adjusted (preferential camping is adjusted to random camping), so that after the adjustment, subscribers can be evenly distributed among the first cell and the neighboring cell. Therefore, to implement the practice of adjusting the network camping policy of the first cell to random camping, the camping policy adjusting unit 302 specifically includes the following multiple subunits (FIG. 7 is a schematic structural diagram of the camping policy adjusting unit 302):
a first adjusting subunit 701, configured to adjust a reselection-starting measurement threshold IdleSintersearch of the first cell and the second cell to a first optimized value, where the first optimized value is greater than a reselection-starting measurement threshold that is set when the first cell is preferential camping;
a second adjusting subunit 702, configured to adjust, if a system message 5 delivered by the first cell or the second cell includes a threshold parameter SsearchHCS for starting an inter-frequency reselection in a hierarchical cell structure scenario, a value of the SsearchHCS parameter to a second optimized value;
a third adjusting subunit 703, configured to, if the second cell is a cell on which no subscriber is allowed to camp, adjust the bar attribute of the second cell, so that a subscriber is allowed to camp on the second cell;
a fourth adjusting subunit 704, configured to, after adjusting the network camping policy of the first cell to random camping, skip performing, for a subscriber who accesses the first cell, a direct retry or a redirection due to service layering.

As shown in FIG. 8, the present invention further provides another radio network controller RNC that is configured to perform the method for adjusting a network camping policy of a cell in the foregoing embodiments. The radio network controller RNC includes at least one processor 801 (a CPU, for example), at least one network interface 802 or another communications interface, a memory 803, and at least one communications bus 804 that is configured to implement a communication connection between these apparatuses. The processor 801 is configured to execute an executable module stored in the memory 803, for example, a computer program. The memory 803 may include a high-speed random access memory (RAM: Random Access Memory), and may further include a non-volatile memory (non-volatile memory), for example, at least one disk memory. By using the at least one network interface 802 (may be wired or wireless), a communication connection between a gateway of the system and at least one of other network elements is implemented. The Internet, a wide area network, a local area network, a metropolitan area network, and the like may be used.

In some implementations, the memory stores a program 8031, and the program may be executed by the processor. The program includes: determining, according to traffic measurement of a first cell, whether the first cell is in a heavy traffic scenario; determining whether the first cell is a preferential camping cell; after determining that the first cell is in a heavy traffic scenario and the first cell is a preferential camping cell, adjusting network camping policies of the first cell and a second cell to random camping, where the first cell and the second cell are inter-frequency co-coverage neighboring cells.

One or more technical solutions provided in the embodiments of the present: application have at least the following technical effects:
In the method and the apparatus provided in the present invention, it is first identified whether a target cell is in a heavy traffic scenario. In the heavy traffic scenario, if it is determined that a network camping policy of the target cell is preferential camping, preferential camping is adjusted to random camping. In the heavy traffic scenario, a burst of services may occur; therefore, if the network camping policy of the target cell is preferential camping, a carrier is prone to congestion, thereby degrading signal quality and making it more difficult to access. If preferential camping is adjusted to random camping, when a burst of services occurs, the bursty services may be randomly sent to available earner, thereby relieving system congestion, improving customer experience, and ensuring system capacity when services received by the system are several times more than services that can be handled by the system.

It may be clearly understood by a person skilled in the art that, for ease and brevity of description, division of the foregoing functional modules is merely used as an example, and in an actual application, the foregoing functions may be allocated to different functional modules according to a requirement, that is, an internal structure of the apparatus is divided into different functional modules, so as to complete all or a part of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. Furthermore, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to an actual requirement to achieve the purposes of the solutions of the embodiments.

Moreover, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing is merely intended to describe the technical solutions of the present application in detail. The descriptions of the foregoing embodiments are merely intended to help understand the method and idea of the present invention, and shall not be construed as a limitation on the present invention. Any variation or replacement readily figured out by a person skilled in the art within the technical scope disclosed in the present invention shall fall within the protection scope of the present invention, which is defined by the appended claims.

## Claims

1. A method for adjusting a network camping policy of a cell, the method comprising:
determining (201), by a network side device according to traffic measurement of a first cell, whether the first cell is in a heavy traffic scenario;
determining (202), by the network side device according to a selection and reselection parameter of the first cell, whether the first cell is a preferential camping cell; and
adjusting (203), by the network side device after determining that the first cell is in the heavy traffic scenario and the first cell is the preferential camping cell, network camping policy of the first cell and network camping policy of a second cell to random camping, wherein the first cell and the second cell are inter-frequency co-coverage neighboring cells , wherein load of the second cell is less than a second threshold; and
after adjusting the network camping policy of the first cell to random camping, skipping performing, by the network side device for a subscriber who accesses the first cell, a direct retry or a redirection due to service layering.

2. The method according to claim 1, wherein the determining, by a network side device according to traffic measurement of a first cell, whether the first cell is in a heavy traffic scenario comprises:
determining, by the network side device when the number of radio resource control, RRC, connection requests received by the first cell in a first duration is greater than or equal to a threshold on the number of RRC accesses, and a proportion of RRC connection requests rejected by the first cell in the first duration due to insufficient air interface resources to the received RRC connection requests is greater than or equal to a first preset threshold, that the first cell is in a heavy traffic scenario; or
determining, by the network side device when the number of cell update requests received by the first cell in a second duration is greater than or equal to a threshold on the number of update requests, that the first cell is in a heavy traffic scenario; or
determining, by the network side device when the number of connected subscribers in the first cell is greater than or equal to a threshold on the number of subscribers, that the first cell is in a heavy traffic scenario.

3. The method according to claim 1, wherein the determining, by the network side device according to a selection and reselection parameter of the first cell, or a selection and reselection parameter of the second cell, whether the first cell is a preferential camping cell comprises:
determining, by the network side device when a pilot measurement type of the first cell is measurement based on received signal code power, RSCP, and an idle signal quality offset 1, IdleQoffset1sn, configured on the first cell, of the second cell is greater than or equal to a first preferential camping threshold, that the first cell is a preferential camping cell; or
determining, by the network side device when a pilot measurement type of the first cell is measurement based on RSCP and an IdleQoffset1sn, configured on the second cell, of the first cell is less than or equal to a second preferential camping threshold, that the first cell is a preferential camping cell; or
determining, by the network side device when a pilot measurement type of the first cell is measurement based on ECNO and an idle signal quality offset 2, IdleQoffset2sn, configured on the first cell, of the second cell is greater than or equal to a third preferential camping threshold, that the first cell is a preferential camping cell; or
determining, by the network side device when a pilot measurement type of the first cell is measurement based on ECNO and an idle signal quality offset 2, IdleQoffset2sn, configured on the second cell, of the first cell is less than or equal to a fourth preferential camping threshold, that the first cell is a preferential camping cell.

4. The method according to claim 1, wherein the determining, by the network side device according to a Bar attribute of the second cell, whether the first cell is a preferential camping cell comprises:
determining, by the network side device when determining, according to the Bar attribute of the second cell, that the second cell is a cell on which no subscriber is allowed to camp, that the first cell is a preferential camping cell.

5. The method according to any one of claims 1 to 4, wherein the adjusting, by the network side device, network camping policy of the first cell and network camping policy of a second cell to random camping comprises:
adjusting, by the network side device, a reselection-starting measurement threshold IdleSintersearch of the first cell and the second cell to a first optimized value, wherein the first optimized value is greater than a reselection-starting measurement threshold that is set when the first cell is preferential camping.

6. The method according to any one of claims 1 to 5, wherein after the adjusting, by the network side device, network camping policy of the first cell and network camping policy of a second cell to random camping, the method further comprises:
if the second cell is a cell on which no subscriber is allowed to camp, adjusting, by the network side device, the bar attribute of the second cell, so that a subscriber is allowed to camp on the second cell.

7. The method according to any one of claims 5 to 6, wherein the adjusting, by the network side device, network camping policy of the first cell and network camping policy of a second cell to random camping further comprises:
if a system message 5, delivered by the first cell or the second cell, comprises an SsearchHCS parameter for starting inter-frequency reselection in a hierarchical cell structure scenario, adjusting, by the network side device, a value of the SsearchHCS parameter to a second optimized value.

8. A network side device comprising:
a determining module (301), configured to determine, according to traffic measurement of a first cell, whether the first cell is in a heavy traffic scenario, and determine whether the first cell is a preferential camping cell; and
a camping policy adjusting module (302), configured to adjust, after it is determined that the first cell is in the heavy traffic scenario and the first cell is the preferential camping cell, network camping policy of the first cell and network camping policy of a second cell to random camping, wherein the first cell and the second cell are inter-frequency co-coverage neighboring cells, wherein the camping policy adjusting module comprises:
a first adjusting subunit (701), configured to adjust a reselection-starting measurement threshold IdleSintersearch of the first cell and the second cell to a first optimized value, wherein the first optimized value is greater than a reselection-starting measurement threshold that is set when the first cell is preferential camping;
a second adjusting subunit (702), configured to adjust, if a system message 5 delivered by the first cell or the second cell comprises an SsearchHCS parameter for starting inter-frequency reselection in a hierarchical cell structure scenario, a value of the SsearchHCS parameter to a second optimized value;
a third adjusting subunit (703), configured to, if the second cell is a cell on which no subscriber is allowed to camp, adjust the bar attribute of the second cell, so that a subscriber is allowed to camp on the second cell; and
a fourth adjusting subunit (704), configured to, after adjusting the network camping policy of the first cell to random camping, skip performing, for a subscriber who accesses the first cell, a direct retry or a redirection due to service layering;
wherein the determining module comprises:
a first determining unit (401), configured to determine, according to the traffic measurement of the first cell, whether the first cell is in a heavy traffic scenario; and
a second determining unit (402), configured to determine, according to a selection and reselection parameter of the first cell, whether the first cell is a preferential camping cell, wherein load of the second cell is less than a second threshold;
wherein the first determining unit (401) comprises at least one of:
an RRC connection request quantity determining subunit (501), configured to determine, when the number of radio resource control, RRC, connection requests received by the first cell in a first duration is greater than or equal to a threshold on the number of RRC accesses, and a proportion of RRC connection requests rejected by the first cell in the first duration due to insufficient air interface resources to the received RRC connection requests is greater than or equal to a first preset threshold, that the first cell is in a heavy traffic scenario;
an update request quantity determining subunit (502), configured to determine, when the number of cell update requests received by the first cell in a second duration is greater than or equal to a threshold on the number of update requests, that the first cell is in a heavy traffic scenario;
a subscriber quantity determining subunit (503), configured to determine, when the number of connected subscribers in the first cell is greater than or equal to a threshold on the number of subscribers, that the first cell is in a heavy traffic scenario.

9. The network side device according to claim 8, wherein the second determining unit comprises:
a first selection and reselection parameter determining subunit (601), configured to, if a pilot measurement type of the first cell is measurement based on received signal code power, RSCP, determine that the first cell is a preferential camping cell, if an idle signal quality offset 1, IdleQoffset1sn, configured on the first cell, of the second cell is greater than or equal to a first preferential camping threshold; or determine that the first cell is a preferential camping cell, if an IdleQoffset1sn, configured on the second cell, of the first cell is less than or equal to a second preferential camping threshold;
a second selection and reselection parameter determining subunit (602), configured to, if the pilot measurement type of the first cell is measurement based on ECNO, determine that the first cell is a preferential camping cell, if an idle signal quality offset 2, IdleQoffset2sn, configured on the first cell, of the second cell is greater than or equal to a third preferential camping threshold; or determine that the first cell is a preferential camping cell, if an idle signal quality offset 2, IdleQoffset2sn, configured on the second cell, of the first cell is less than or equal to a fourth preferential camping threshold;
a Bar attribute determining subunit (603), configured to determine, when it is determined, according to the Bar attribute of the second cell, that the second cell is a cell on which no subscriber is allowed to camp, that a network camping policy of the first cell is preferential camping.

## Patentansprüche

1. Verfahren zum Anpassen einer Netzwerk-Campingrichtlinie einer Zelle, wobei das Verfahren umfasst:
Ermitteln (201) durch eine netzwerkseitige Vorrichtung gemäß einer Verkehrsmessung einer ersten Zelle, ob sich die erste Zelle in einem Szenario mit starkem Verkehr befindet;
Ermitteln (202) durch die netzwerkseitige Vorrichtung gemäß einem Auswahl- und Neuauswahlparameter der ersten Zelle, ob die erste Zelle eine bevorzugte Campingzelle ist; und
Anpassen (203), durch die netzwerkseitige Vorrichtung nach dem Ermitteln, dass sich die erste Zelle im Szenario mit starkem Verkehr befindet und dass die erste Zelle die bevorzugte Campingzelle ist, einer Netzwerk-Campingrichtlinie der ersten Zelle und einer Netzwerk-Campingrichtlinie einer zweiten Zelle auf zufälliges Camping, wobei die erste Zelle und die zweite Zelle Zwischenfrequenz-Nachbarzellen mit gemeinsamer Abdeckung sind und wobei die Last an der zweiten Zelle unter einem zweiten Schwellenwert liegt; und
nach Anpassen der Netzwerk-Campingrichtlinie der ersten Zelle auf zufälliges Camping ein Übergehen einer Durchführung, durch die netzwerkseitige Vorrichtung für einen Teilnehmer, der auf die erste Zelle zugreift, einer direkten Wiederholung oder einer Weiterleitung aufgrund von Dienstschichtung.

2. Verfahren nach Anspruch 1, wobei das Ermitteln durch eine netzwerkseitige Vorrichtung gemäß einer Verkehrsmessung einer ersten Zelle, ob sich die erste Zelle in einem Szenario mit starkem Verkehr befindet, umfasst:
Ermitteln, durch die netzwerkseitige Vorrichtung, wenn die Anzahl an Funkressourcensteuerungs-Verbindungsanforderungen, RRC-Verbindungsanforderungen, die von der ersten Zelle in einer ersten Zeitspanne empfangen werden, größer oder gleich einem Schwellenwert für die Anzahl an RRC-Zugriffen ist und ein Anteil an RRC-Verbindungsanforderungen, die von der ersten Zelle in der ersten Zeitspanne aufgrund von unzureichenden Luftschnittstellenressourcen abgelehnt wurden, aus den empfangenen RRC-Verbindungsanforderungen größer oder gleich einem ersten voreingestellten Schwellenwert ist, dass sich die erste Zelle in einem Szenario mit starkem Verkehr befindet; oder
Ermitteln, durch die netzwerkseitige Vorrichtung, wenn die Anzahl an Zellenaktualisierungsanforderungen, die von der ersten Zelle in einer zweiten Zeitspanne empfangen werden, größer oder gleich einem Schwellenwert für die Anzahl der Aktualisierungsanforderungen ist, dass sich die erste Zelle in einem Szenario mit starkem Verkehr befindet; oder
Ermitteln, durch die netzwerkseitige Vorrichtung, wenn die Anzahl an verbundenen Teilnehmern in der ersten Zelle größer oder gleich einem Schwellenwert für die Anzahl der Teilnehmer ist, dass sich die erste Zelle in einem Szenario mit starkem Verkehr befindet.

3. Verfahren nach Anspruch 1, wobei das Ermitteln durch die netzwerkseitige Vorrichtung gemäß einem Auswahl- und Neuauswahlparameter der ersten Zelle oder einem Auswahl- und Neuauswahlparameter der zweiten Zelle, ob die erste Zelle eine bevorzugte Campingzelle ist, umfasst:
Ermitteln, durch die netzwerkseitige Vorrichtung, wenn ein Pilotmesstyp der ersten Zelle eine Messung auf Grundlage einer empfangenen Signalcodeleistung, RSCP, ist und ein an der ersten Zelle konfigurierter Ruhesignalqualitätsoffset 1, IdleQoffset1sn, der zweiten Zelle größer oder gleich einem ersten bevorzugten Camping-Schwellenwert ist, dass die erste Zelle eine bevorzugte Campingzelle ist; oder
Ermitteln, durch die netzwerkseitige Vorrichtung, wenn ein Pilotmesstyp der ersten Zelle eine Messung auf Grundlage einer RSCP ist und ein an der zweiten Zelle konfigurierter IdleQoffsetlsn der ersten Zelle kleiner oder gleich einem zweiten bevorzugten Camping-Schwellenwert ist, dass die erste Zelle eine bevorzugte Campingzelle ist; oder
Ermitteln, durch die netzwerkseitige Vorrichtung, wenn ein Pilotmesstyp der ersten Zelle eine Messung auf Grundlage von ECNO ist und ein an der ersten Zelle konfigurierter Ruhesignalqualitätsoffset 2, IdleQoffset2sn, der zweiten Zelle größer oder gleich einem dritten bevorzugten Camping-Schwellenwert ist, dass die erste Zelle eine bevorzugte Campingzelle ist; oder
Ermitteln, durch die netzwerkseitige Vorrichtung, wenn ein Pilotmesstyp der ersten Zelle eine Messung auf Grundlage von ECNO ist und ein an der zweiten Zelle konfigurierter Ruhesignalqualitätsoffset 2, IdleQoffset2sn, der ersten Zelle kleiner oder gleich einem vierten bevorzugten Camping-Schwellenwert ist, dass die erste Zelle eine bevorzugte Campingzelle ist.

4. Verfahren nach Anspruch 1, wobei das Ermitteln durch die netzwerkseitige Vorrichtung gemäß einem Balkenattribut der zweiten Zelle, ob die erste Zelle eine bevorzugte Campingzelle ist, umfasst:
Ermitteln durch die netzwerkseitige Vorrichtung, dass die erste Zelle eine bevorzugte Campingzelle ist, wenn gemäß dem Balkenattribut der zweiten Zelle ermittelt wird, dass die zweite Zelle eine Zelle ist, an der keinem Teilnehmer ein Camping erlaubt ist.

5. Verfahren nach einem der Ansprüche 1 bis 4, wobei das Anpassen der Netzwerk-Campingrichtlinie der ersten Zelle und der Netzwerk-Campingrichtlinie einer zweiten Zelle durch die netzwerkseitige Vorrichtung auf zufälliges Camping umfasst:
Anpassen, durch die netzwerkseitige Vorrichtung, eines Neuauswahl-Anfangsmessschwellenwerts IdleSintersearch der ersten Zelle und der zweiten Zelle auf einen ersten optimierten Wert, wobei der erste optimierte Wert größer als ein Neuauswahl-Anfangsmessschwellenwert ist, der festgelegt ist, wenn die erste Zelle eine bevorzugte Campingzelle ist.

6. Verfahren nach einem der Ansprüche 1 bis 5, wobei nach dem Anpassen der Netzwerk-Campingrichtlinie der ersten Zelle und der Netzwerk-Campingrichtlinie einer zweiten Zelle durch die netzwerkseitige Vorrichtung auf zufälliges Camping das Verfahren ferner umfasst:
falls die zweite Zelle eine Zelle ist, an der keinem Teilnehmer ein Camping erlaubt ist, Anpassen des Balkenattributs der zweiten Zelle durch die netzwerkseitige Vorrichtung, sodass einem Teilnehmer ein Camping an der zweiten Zelle erlaubt ist.

7. Verfahren nach einem der Ansprüche 5 bis 6, wobei das Anpassen der Netzwerk-Campingrichtlinie der ersten Zelle und der Netzwerk-Campingrichtlinie einer zweiten Zelle durch die netzwerkseitige Vorrichtung auf zufälliges Camping ferner umfasst:
falls eine Systemnachricht 5, die von der ersten Zelle oder der zweiten Zelle geliefert wird, einen SsearchHCS-Paramter zum Beginnen einer Zwischenfrequenz-Neuauswahl in einem hierarchischen Zellenstrukturszenario umfasst, Anpassen eines Werts des SsearchHCS-Parameters auf einen zweiten optimierten Wert durch die netzwerkseitige Vorrichtung.

8. Netzwerkseitige Vorrichtung, umfassend:
ein Ermittlungsmodul (301), das konfiguriert ist, gemäß der Verkehrsmessung einer ersten Zelle zu ermitteln, ob sich die erste Zelle in einem Szenario mit starkem Verkehr befindet, und zu ermitteln, ob die erste Zelle eine bevorzugte Campingzelle ist; und
ein Campingrichtlinien-Anpassungsmodul (302), das konfiguriert ist, nach dem Ermitteln, dass sich die erste Zelle im Szenario mit starkem Verkehr befindet und dass die erste Zelle die bevorzugte Campingzelle ist, eine Netzwerk-Campingrichtlinie der ersten Zelle und eine Netzwerk-Campingrichtlinie einer zweiten Zelle auf zufälliges Camping anzupassen, wobei die erste Zelle und die zweite Zelle Zwischenfrequenz-Nachbarzellen mit gemeinsamer Abdeckung sind und wobei das Campingrichtlinien-Anpassungsmodul umfasst:
eine erste Anpassungs-Untereinheit (701), die konfiguriert ist, einen Neuauswahl-Anfangsmessschwellenwert IdleSintersearch der ersten Zelle und der zweiten Zelle auf einen ersten optimierten Wert anzupassen, wobei der erste optimierte Wert größer als ein Neuauswahl-Anfangsmessschwellenwert ist, der festgelegt ist, wenn die erste Zelle eine bevorzugte Campingzelle ist;
eine zweite Anpassungs-Untereinheit (702), die konfiguriert ist, falls eine Systemnachricht 5, die von der ersten Zelle oder der zweiten Zelle geliefert wird, einen SsearchHCS-Paramter zum Beginnen einer Zwischenfrequenz-Neuauswahl in einem hierarchischen Zellenstrukturszenario umfasst, einen Wert des SsearchHCS-Parameters auf einen zweiten optimierten Wert anzupassen;
eine dritte Anpassungs-Untereinheit (703), die konfiguriert ist, falls die zweite Zelle eine Zelle ist, an der keinem Teilnehmer ein Camping erlaubt ist, das Balkenattribut der zweiten Zelle so anzupassen, dass einem Teilnehmer ein Camping an der zweiten Zelle erlaubt ist; und
eine vierte Anpassungs-Untereinheit (704), die konfiguriert ist, nach dem Anpassen der Netzwerk-Campingrichtlinie der ersten Zelle auf zufälliges Camping eine Durchführung einer direkten Wiederholung oder einer Weiterleitung aufgrund von Dienstschichtung für einen Teilnehmer, der auf die erste Zelle zugreift, zu übergehen;
wobei das Ermittlungsmodul umfasst:
eine erste Ermittlungseinheit (401), die konfiguriert ist, gemäß der Verkehrsmessung der ersten Zelle zu ermitteln, ob sich die erste Zelle in einem Szenario mit starkem Verkehr befindet; und
eine zweite Ermittlungseinheit (402), die konfiguriert ist, gemäß einem Auswahl- und Neuauswahlparameter der ersten Zelle zu ermitteln, ob die erste Zelle eine bevorzugte Campingzelle ist, wobei eine Last der zweiten Zelle unter einem zweiten Schwellenwert liegt;
wobei die erste Ermittlungseinheit (401) mindestens eines umfasst von:
einer Untereinheit zum Ermitteln einer RRC-Verbindungsanforderungsanzahl (501), die konfiguriert ist, zu ermitteln, wenn die Anzahl an Funkressourcensteuerungs-Verbindungsanforderungen, RRC-Verbindungsanforderungen, die von der ersten Zelle in einer ersten Zeitspanne empfangen werden, größer oder gleich einem Schwellenwert für die Anzahl an RRC-Zugriffen ist und ein Anteil an RRC-Verbindungsanforderungen, die von der ersten Zelle in der ersten Zeitspanne aufgrund von unzureichenden Luftschnittstellenressourcen abgelehnt wurden, aus den empfangenen RRC-Verbindungsanforderungen größer oder gleich einem ersten voreingestellten Schwellenwert ist, dass sich die erste Zelle in einem Szenario mit starkem Verkehr befindet;
einer Untereinheit zum Ermitteln einer Aktualisierungsanforderungsanzahl (502), die konfiguriert ist, zu ermitteln, wenn die Anzahl an Zellenaktualisierungsanforderungen, die von der ersten Zelle in einer zweiten Zeitspanne empfangen werden, größer oder gleich einem Schwellenwert für die Anzahl der Aktualisierungsanforderungen ist, dass sich die erste Zelle in einem Szenario mit starkem Verkehr befindet;
einer Untereinheit zum Ermitteln einer Teilnehmeranzahl (503), die konfiguriert ist, zu ermitteln, wenn die Anzahl an verbundenen Teilnehmern in der ersten Zelle größer oder gleich einem Schwellenwert für die Anzahl der Teilnehmer ist, dass sich die erste Zelle in einem Szenario mit starkem Verkehr befindet.

9. Netzwerkseitige Vorrichtung nach Anspruch 8, wobei die zweite Ermittlungseinheit umfasst:
eine erste Untereinheit zum Ermitteln eines Auswahl- und Neuauswahlparameters (601), die konfiguriert ist, falls ein Pilotmesstyp der ersten Zelle eine Messung auf Grundlage einer empfangenen Signalcodeleistung, RSCP, ist, zu ermitteln, dass die erste Zelle eine bevorzugte Campingzelle ist, falls ein an der ersten Zelle konfigurierter Ruhesignalqualitätsoffset 1, IdleQoffset1sn, der zweiten Zelle größer oder gleich einem ersten bevorzugten Camping-Schwellenwert ist; oder zu ermitteln, dass die erste Zelle eine bevorzugte Campingzelle ist, falls ein an der zweiten Zelle konfigurierter IdleQoffset1sn der ersten Zelle kleiner oder gleich einem zweiten bevorzugten Camping-Schwellenwert ist;
eine zweite Untereinheit zum Ermitteln eines Auswahl- und Neuauswahlparameters (602), die konfiguriert ist, falls der Pilotmesstyp der ersten Zelle eine Messung auf Grundlage von ECNO ist, zu ermitteln, dass die erste Zelle eine bevorzugte Campingzelle ist, falls ein an der ersten Zelle konfigurierter Ruhesignalqualitätsoffset 2, IdleQoffset2sn, der zweiten Zelle größer oder gleich einem dritten bevorzugten Camping-Schwellenwert ist; oder zu ermitteln, dass die erste Zelle eine bevorzugte Campingzelle ist, falls ein an der zweiten Zelle konfigurierter Ruhesignalqualitätsoffset 2, IdleQoffset2sn, der ersten Zelle kleiner oder gleich einem vierten bevorzugten Camping-Schwellenwert ist;
eine Untereinheit zum Ermitteln eines Balkenattributs (603), die konfiguriert ist, zu ermitteln, wenn gemäß dem Balkenattribut der zweiten Zelle ermittelt wird, dass die zweite Zelle eine Zelle ist, an der keinem Teilnehmer ein Camping erlaubt ist, dass eine Netzwerk-Campingrichtlinie der ersten Zelle ein bevorzugtes Camping ist.

## Revendications

1. Procédé pour régler une politique de domiciliation de réseau d'une cellule, le procédé comprenant de :
déterminer (201), par un dispositif côté réseau, en fonction d'une mesure de trafic d'une première cellule, si la première cellule est dans un scénario de trafic intense ;
déterminer (202), par le dispositif côté réseau, en fonction d'un paramètre de sélection et de resélection de la première cellule, si la première cellule est une cellule de domiciliation préférentielle ; et
régler (203), par le dispositif côté réseau, après avoir déterminé que la première cellule est dans le scénario de trafic intense et que la première cellule est la cellule de domiciliation préférentielle, la politique de domiciliation de réseau de la première cellule et la politique de domiciliation de réseau d'une seconde cellule sur une domiciliation aléatoire, dans lequel la première cellule et la seconde cellule sont des cellules voisines de co-couverture inter-fréquences, dans lequel la charge de la seconde cellule est inférieure à un second seuil ; et
après avoir réglé la politique de domiciliation de réseau de la première cellule sur une domiciliation aléatoire, sauter l'exécution, par le dispositif côté réseau pour un abonné qui accède à la première cellule, d'une nouvelle tentative directe ou une redirection due à la superposition de services.

2. Procédé selon la revendication 1, dans lequel la détermination, par un dispositif côté réseau, en fonction de la mesure de trafic d'une première cellule, pour savoir si la première cellule se trouve dans un scénario de trafic intense comprend de :
déterminer, par le dispositif côté réseau, lorsque le nombre de demandes de connexion de gestion des ressources radio, RRC, reçues par la première cellule pendant une première durée est supérieur ou égal à un seuil sur le nombre d'accès RRC, et qu'une proportion de demandes de connexion RRC rejetées par la première cellule pendant la première durée en raison de ressources d'interface radio insuffisantes par rapport aux demandes de connexion RRC reçues est supérieure ou
égale à un premier seuil prédéfini, que la première cellule est dans un scénario de trafic intense ; ou
déterminer, par le dispositif côté réseau, lorsque le nombre de demandes de mise à jour de cellule reçues par la première cellule pendant une seconde durée est supérieur ou égal à un seuil sur le nombre de demandes de mise à jour, que la première cellule est dans un scénario de trafic intense ; ou
déterminer, par le dispositif côté réseau, lorsque le nombre d'abonnés connectés dans la première cellule est supérieur ou égal à un seuil sur le nombre d'abonnés, que la première cellule est dans un scénario de trafic intense.

3. Procédé selon la revendication 1, dans lequel la détermination, par le dispositif côté réseau, en fonction d'un paramètre de sélection et de resélection de la première cellule, ou d'un paramètre de sélection et de resélection de la seconde cellule, pour savoir si la première cellule est une cellule de domiciliation préférentielle comprend de :
déterminer, par le dispositif côté réseau, lorsqu'un type de mesure pilote de la première cellule est une mesure basée sur la puissance de code de signal reçue, RSCP, et qu'un décalage de qualité de signal inactif 1, IdleQoffsetlsn, configuré sur la première cellule, de la seconde cellule est supérieur à ou égal à un premier seuil de domiciliation préférentielle, que la première cellule est une cellule de domiciliation préférentielle ; ou
déterminer, par le dispositif côté réseau, lorsqu'un type de mesure pilote de la première cellule est une mesure basée sur la RSCP et qu'un IdleQoffset1sn, configuré sur la seconde cellule, de la première cellule est inférieur ou égal à un second seuil de domiciliation préférentielle, que la première cellule est une cellule de domiciliation préférentielle ; ou
déterminer, par le dispositif côté réseau, lorsqu'un type de mesure pilote de la première cellule est une mesure basée sur un ECNO et qu'un décalage de qualité de signal inactif 2, IdleQoffset2sn, configuré sur la première cellule, de la seconde cellule est supérieur ou égal à un troisième seuil de domiciliation, que la première cellule est une cellule de domiciliation préférentielle ; ou
déterminer, par le dispositif côté réseau, lorsqu'un type de mesure pilote de la première cellule est une mesure basée sur un ECNO et qu'un décalage de qualité de signal inactif 2, IdleQoffset2sn, configuré sur la seconde cellule, de la première cellule est inférieur ou égal à un quatrième seuil de domiciliation, que la première cellule est une cellule de domiciliation préférentielle.

4. Procédé selon la revendication 1, dans lequel la détermination, par le dispositif côté réseau, en fonction d'un attribut Interdiction de la seconde cellule, pour savoir si la première cellule est une cellule de domiciliation préférentielle comprend de :
déterminer, par le dispositif côté réseau, lorsqu'il est déterminé, en fonction de l'attribut Interdiction de la seconde cellule, que la seconde cellule est une cellule sur laquelle aucun abonné n'est autorisé à se domicilier, que la première cellule est une cellule de domiciliation préférentielle.

5. Procédé selon l'une quelconque des revendications 1 à 4, dans lequel le réglage, par le dispositif côté réseau, de la politique de domiciliation de réseau de la première cellule et de la politique de domiciliation de réseau d'une seconde cellule sur une domiciliation aléatoire comprend de :
régler, par le dispositif côté réseau, un seuil de mesure de démarrage de resélection IdleSintersearch de la première cellule et de la seconde cellule sur une première valeur optimisée, dans lequel la première valeur optimisée est supérieure à un seuil de mesure de démarrage de resélection qui est établi lorsque la première cellule est une domiciliation préférentielle.

6. Procédé selon l'une quelconque des revendications 1 à 5, dans lequel après le réglage, par le dispositif côté réseau, de la politique de domiciliation de réseau de la première cellule et de la politique de domiciliation de réseau d'une seconde cellule sur une domiciliation aléatoire, le procédé comprend en outre de :
si la seconde cellule est une cellule sur laquelle aucun abonné n'est autorisé à se domicilier, régler, par le dispositif côté réseau, l'attribut Interdiction de la seconde cellule, de sorte qu'un abonné est autorisé à se domicilier sur la seconde cellule.

7. Procédé selon l'une quelconque des revendications 5 à 6, dans lequel le réglage, par le dispositif côté réseau, de la politique de domiciliation de réseau de la première cellule et de la politique de domiciliation de réseau d'une seconde cellule sur une domiciliation aléatoire comprend en outre de :
si un message système 5, délivré par la première cellule ou la seconde cellule, comprend un paramètre SsearchHCS pour démarrer la resélection inter-fréquences dans un scénario de structure cellulaire hiérarchique, régler, par le dispositif côté réseau, une valeur du paramètre SsearchHCS sur une seconde valeur optimisée.

8. Dispositif côté réseau, comprenant :
un module de détermination (301), configuré pour déterminer, en fonction d'une mesure de trafic d'une première cellule, si la première cellule est dans un scénario de trafic intense, et déterminer si la première cellule est une cellule de domiciliation préférentielle ; et
un module de réglage de politique de domiciliation (302), configuré pour régler, après avoir déterminé que la première cellule est dans le scénario de trafic intense et que la première cellule est la cellule de domiciliation préférentielle, la politique de domiciliation de réseau de la première cellule et la politique de domiciliation de réseau d'une seconde cellule sur une domiciliation aléatoire, dans lequel la première cellule et la seconde cellule sont des cellules voisines de co-couverture inter-fréquences, dans lequel le module de réglage de politique de domiciliation comprend :
une première sous-unité de réglage (701), configurée pour régler un seuil de mesure de démarrage de resélection IdleSintersearch de la première cellule et de la seconde cellule sur une première valeur optimisée, dans lequel la première valeur optimisée est supérieure à un seuil de mesure de démarrage de resélection qui est établi lorsque la première cellule est une domiciliation préférentielle ;
une seconde sous-unité de réglage (702), configurée pour régler, si un message système 5 délivré par la première cellule ou la seconde cellule comprend un paramètre SsearchHCS pour démarrer une resélection inter-fréquences dans un scénario de structure cellulaire hiérarchique, une valeur du paramètre SsearchHCS sur une seconde valeur optimisée ;
une troisième sous-unité de réglage (703) configurée pour, si la seconde cellule est une cellule sur laquelle aucun abonné n'est autorisé à se domicilier, régler l'attribut Interdiction de la seconde cellule, de sorte qu'un abonné est autorisé à se domicilier sur la seconde cellule ; et
une quatrième sous-unité de réglage (704) configurée pour, après le réglage de la politique de domiciliation de réseau de la première cellule sur la domiciliation aléatoire, sauter l'exécution, pour un abonné qui accède à la première cellule, une nouvelle tentative directe ou une redirection due à la superposition de services ;
dans lequel le module de détermination comprend :
une première unité de détermination (401), configurée pour déterminer, en fonction de la mesure de trafic de la première cellule, si la première cellule est dans un scénario de trafic intense ; et
une seconde unité de détermination (402), configurée pour déterminer, en fonction d'un paramètre de sélection et de resélection de la première cellule, si la première cellule est une cellule de domiciliation préférentielle, dans lequel la charge de la seconde cellule est inférieure à un second seuil ;
dans lequel la première unité de détermination (401) comprend au moins l'une parmi :
une sous-unité de détermination de quantité de demandes de connexion RRC (501), configurée pour déterminer, lorsque le nombre de demandes de connexion de gestion des ressources radio, RRC, reçues par la première cellule pendant une première durée est supérieur ou égal à un seuil sur le nombre d'accès RRC, et qu'une proportion de demandes de connexion RRC rejetées par la première cellule pendant la première durée en raison de ressources d'interface radio insuffisantes par rapport aux demandes de connexion RRC reçues est supérieure ou égale à un premier seuil prédéfini, que la première cellule est dans un scénario de trafic intense ;
une sous-unité de détermination de quantité de demandes de mise à jour (502), configurée pour déterminer, lorsque le nombre de demandes de mise à jour de cellule reçues par la première cellule pendant une seconde durée est supérieur ou égal à un seuil sur le nombre de demandes de mise à jour, que la première cellule est dans un scénario de trafic intense ;
une sous-unité de détermination de quantité d'abonnés (503), configurée pour déterminer, lorsque le nombre d'abonnés connectés dans la première cellule est supérieur ou égal à un seuil sur le nombre d'abonnés, que la première cellule est dans un scénario de trafic intense.

9. Dispositif côté réseau selon la revendication 8, dans lequel la seconde unité de détermination comprend :
une première sous-unité de détermination de paramètre de sélection et de resélection (601), configurée pour, si un type de mesure pilote de la première cellule est une mesure basée sur une puissance de code de signal reçue, RSCP, déterminer que la première cellule est une cellule de domiciliation préférentielle, si un décalage de qualité de signal inactif 1, IdleQoffset1sn, configuré sur la première cellule, de la seconde cellule est supérieur ou égal à un premier seuil de domiciliation préférentielle ; ou déterminer que la première cellule est une cellule de domiciliation préférentielle, si un IdleQoffset1sn, configuré sur la seconde cellule, de la première cellule est inférieur ou égal à un second seuil de domiciliation préférentielle ;
une seconde sous-unité de détermination de paramètre de sélection et de resélection (602), configurée pour, si le type de mesure pilote de la première cellule est une mesure basée sur un ECNO, déterminer que la première cellule est une cellule de domiciliation préférentielle, si un décalage de qualité de signal inactif 2, IdleQoffset2sn, configuré sur la première cellule, de la seconde cellule est supérieur ou égal à un troisième seuil de domiciliation préférentielle ; ou déterminer que la première cellule est une cellule de domiciliation préférentielle, si un décalage de qualité de signal inactif 2, IdleQoffset2sn, configuré sur la seconde cellule, de la première cellule est inférieur ou égal à un quatrième seuil de domiciliation préférentielle ;
une sous-unité de détermination d'attribut Interdiction (603), configurée pour déterminer, lorsqu'il est déterminé, en fonction de l'attribut Interdiction de la seconde cellule, que la seconde cellule est une cellule sur laquelle aucun abonné n'est autorisé à se domicilier, qu'une politique de domiciliation de réseau de la première cellule est une domiciliation préférentielle.
